Europäisches Patentamt

European Patent Office

Office européen des brevets

(19)

(11) Veröffentlichungsnummer : **0 038 875**
**B1**

# (12) EUROPÄISCHE PATENTSCHRIFT

(45) Veröffentlichungstag der Patentschrift :
13.03.85

(21) Anmeldenummer : 80108117.5

(22) Anmeldetag : 22.12.80

(51) Int. Cl.⁴ : **H 04 K 1/06, H 04 L 9/00**

(54) Verfahren und Schaltungsanordnung zur Verschlüsselung von Nachrichtenzeichen.

(30) Priorität : 28.03.80 DE 3011997

(43) Veröffentlichungstag der Anmeldung :
04.11.81 Patentblatt 81/44

(45) Bekanntmachung des Hinweises auf die Patenterteilung : 13.03.85 Patentblatt 85/11

(84) Benannte Vertragsstaaten :
CH DE GB LI NL

(56) Entgegenhaltungen :
PROCEEDINGS OF THE I.E.E.E., Band 67, Nr. 3, März
1979, Seiten 497-426 W. DIFFIE et al.: "Privacy and
authentication: An Introduction to cryptography"

(73) Patentinhaber : ANT Nachrichtentechnik GmbH
Gerberstrasse 33
D-7150 Backnang (DE)

(72) Erfinder : Bitzer, Wolfgang, Dipl.-Ing.
Rechbergstrasse 15
D-7153 Weissach im Tal (DE)

(74) Vertreter : Schickle, Gerhard, Dipl.-Ing. et al
ANT Nachrichtentechnik GmbH Patent- und
Lizenzabteilung Gerberstrasse 33
D-7150 Backnang (DE)

**Beschreibung**

Die Erfindung bezieht sich auf ein Verfahren zur Verschlüsselung von Nachrichtenzeichen gemäß Oberbegriff des Anspruchs 1.

Solche Verfahren sind beispielsweise für geheime Nachrichtenübertragungen vorgeschlagen worden. Zur fehlerfreien Entschlüsselung von derart verschlüsselten Nachrichtenzeichen sind auf Sende- und Empfangsseite jeweils identische Schlüsselprogramme, identische Schlüssel (Startadressen) und Synchronismus Voraussetzung.

Bei der Verschlüsselung von Textzeichenfolgen werden die zu verschlüsselnden Zeichen eines Klartextes durch ihnen entsprechende Zeichen eines Geheimtextes ersetzt. Dazu wird ein Geheimalphabet benötigt, das zu jedem Zeichen des Klartextalphabetes entsprechende Geheimzeichen enthält. Besonders sicher gegen unbefugten Zugriff Dritter wird dieses Ersatzverfahren, wenn zur Verschlüsselung jedes Zeichens des Klartextes ein anderes, neues Geheimalphabet verwendet wird. Diese Geheimalphabete werden durch elektronische Rechner aus einem zuvor eingegebenen Grundschlüssel erzeugt, wobei in einem ersten Schritt mittels eines Pseudozufallsfolgengenerators aus dem eingegebenen Grundschlüssel eines Pseudozufallszeichenfolge von praktisch unbegrenzter Länge errechnet wird, aus der in einem zweiten Schritt die Geheimalphabete, die aus Permutationen eines vorgegebenen Alphabets bestehen, erzeugt werden. Bei einem solchen Verfahren wurde vorgeschlagen, die von der obengenannten Pseudozufallszeichenfolge erzeugten Zeichen in der Reihenfolge ihrer Erzeugung als neues Geheimalphabet zu verwenden, wobei wiederholt erzeugte Zeichen nicht verwendet werden.

Nachteilig ist dabei, daß die Pseudozufallszeichenfolge wesentlich mehr Zeichen benötigt, als das Geheimalphabet enthält. Weiterhin werden nicht mit Sicherheit alle Zeichen des Geheimalphabets erfaßt, so daß diese systematisch ergänzt werden müssen, was kryptologisch nachteilig ist. Außerdem ist nachteilig, daß die Reihenfolge der Geheimalphabetzeichen mit der Reihenfolge der Zeichen der Pseudozufallszeichenfolge hauptsächlich am Anfang weitgehend übereinstimmt, was gewisse Rückschlüsse vom Geheimalphabet auf die Pseudozufallsfolge erlaubt.

Der Erfindung lag deshalb die Aufgabe zugrunde, ein Verfahren zur Erzeugung von Permutationen (Vertauschungen) der obigen Art anzugeben, bei dem ohne großen Aufwand und ohne, daß die Zufalls- bzw. Pseudozufallsfolge wesentlich mehr Zeichen benötigt, alle Zeichen erfaßt werden können. Außerdem soll die Korrelation zwischen erzeugter Permutation und erzeugender Zufalls- oder Pseudozufallsfolge nicht ohne weiteres ersichtlich sein. Weiterhin soll eine Schaltungsanordnung zur Durchführung des erfindungsgemässen Verfahrens angegeben werden, die mit wenig technischem Aufwand realisierbar ist.

Die Erfindung wurde durch die im kennzeichnenden Teil des Anspruchs 1 angegebenen Maßnahmen gelöst.

Die Erfindung geht von der Idee aus, daß von einer beliebigen Anfangspermutation von n Zeichen ausgegangen wird, aus der unter der Steuerung durch eine Pseudozufallsfolge durch nochmaliges paarweises Vertauschen der Zeichen eine neue Permutation erzeugt wird. Die Anzahl der vertauschten Vorgänge ist an sich beliebig, vorteilhafterweise liegt sie etwa in der Größenordnung der Zeichenanzahl n. Es ist einzusehen, daß die Arbeitsgeschwindigkeit des Verfahrens umso höher ist, je weniger Vertauschungsvorgänge für eine neue Permutation aufgewendet werden, wobei dann jedoch die Korrelation zwischen zwei aufeinanderfolgenden Permutationen zu durchsichtig wird.

Im folgenden wird der Ablauf des erfindungsgemäßen Verfahrens näher beschrieben. Ausgegangen wird von einer Permutation von n Zeichen, beispielsweise von der natürlichen Reihenfolge E1, E2, ... Ea ... Eb ..., En-1, En. Durch eine Pseudozufallsfolge werde ein Zeichen Ea erzeugt. Mit Hilfe einer zweiten Folge werde ein Zeichen Eb ausgewählt. Zeichen Ea tauscht seinen Platz mit Zeichen Eb, wodurch ein erster Vertauschungsschritt abgeschlossen ist, dem eine Anzahl Wiederholungen mit anderen Zeichen Ea, Eb folgt.

In einer besonders vorteilhaften Ausgestaltung der Erfindung wechselt jedes Zeichen mindestens einmal, im Durchschnitt sogar zweimal seinen Platz, indem jedes Zeichen mittels der zweiten Folge einmal adressiert wird, beispielsweise in der natürlichen Reihenfolge E1, E2 ... En.

In einer weiteren vorteilhaften Ausgestaltung der Erfindung werden die beiden zu vertauschenden Zeichen durch nichtkorrelierte Pseudozufallsfolgen bestimmt.

Falls keine Reproduzierbarkeit der Permutationen erforderlich ist, können anstelle der Pseudozufallsfolgen echte Zufallsfolgen verwendet werden, wie sie z. B. von einem Rauschgenerator ableitbar sind.

Eine günstige Anwendung des Verfahrens erfolgt bei der Sprachverschleierung, wobei das Sprachfrequenzband in z. B. fünf gleiche Teile unterteilt wird, die nach einer Quasizufallsfolge vertauscht werden, oder wobei das Sprachsignal beispielsweise mit einer Taktfrequenz von 8 kHz abgetastet und die Abtastwerte zeitlich vertauscht werden. Werden den Sprachfrequenz-Teilbändern oder den Abtastwerten, beide sind hier mit Sprachsignalelemente bezeichnet, Geheimzeichen zugeordnet, die nach dem beschriebenen Verfahren vertauscht werden, so wird der bei der Verschleierung an sich etwas geringe Geheimhaltungsgrad verbessert, d. h. die « knackbarkeit » wird erschwert. Eine weitere Verbesserung wird erreicht durch Kombination von Sprachfrequenz-Teilband- und Sprachsignal-Ab-

tastwert-Vertauschung bei gleichzeitiger Anwendung des Vertauschungsverfahrens.

Selbstverständlich ist das erfindungsgemäße Verfahren nicht auf die Anwendung in Text- oder Sprachschlüsselgeräten beschränkt, sondern kann vorteilhafterweise auch bei der Frequenzzuweisung in Funknetzen eingesetzt werden, die nach dem Frequenzsprungverfahren unter Vermeidung einer Doppelbelegung der Frequenzen arbeiten.

Eine weitere vorteilhafte Ausgestaltung der Erfindung ergibt sich, wenn die Auswahl der beiden zu vertauschenden Zeichen derart erfolgt, daß die Folgen nicht die Zeichen selbst, sondern deren Platzadressen angeben. Von bedeutendem Vorteil ist hierbei, daß die Anfangspermutation entscheidenden Einfluß auf alle im folgenden erzeugten Permutationen aufweist.

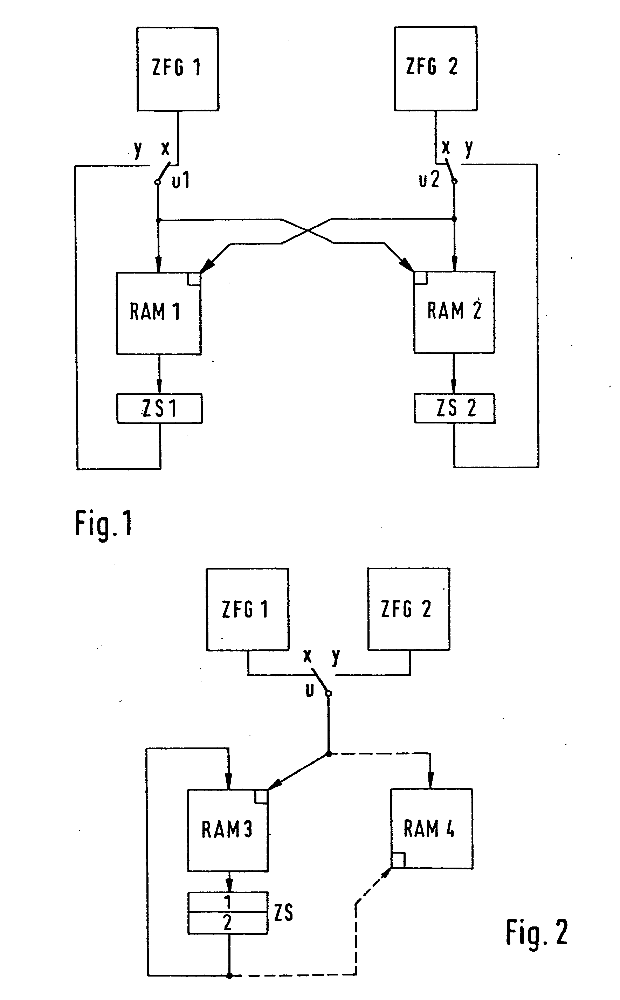

Es folgt nun die Beschreibung der Erfindung anhand der Figuren. Die Figur 1 zeigt eine Schaltungsanordnung zur Durchführung des erfindungsgemäßen Verfahrens bei Textschlüsselgeräten, wobei n Zeichen ein Alphabet bilden und jedes Zeichen beispielsweise m Bit enthalten. Die Schaltungsanordnung besteht aus zwei Zeichenfolgegeneratoren ZFG1 bzw. ZFG2, aus zwei Speichern mit wahlfreiem Zugriff RAM1, RAM2 und zwei Zwischenspeichern ZS1 bzw. ZS2. Im zweiten Speicher ist das Geheimalphabet abgespeichert, dessen Zeichen durch die Zeichen des Klaralphabets adressierbar sind. Im ersten Speicher RAM1 ist dagegen das inverse Alphabet abgespeichert, d. h. die Zeichen des Klaralphabets, die durch die zugeordneten Zeichen des Geheimalphabets adressierbar sind.

Es wird also hier der zweite Speicher RAM2 zum Verschlüsseln und der erste Speicher RAM1 zum Entschlüsseln benutzt. Bei beiden Speichern ist der Ausgang auf den Eingang des zugeordneten Zwischenspeichers geschaltet, dessen Ausgang über steuerbare Schalter u1, u2 in Stellung y auf den Eingang des Speichers rückführbar ist. In Stellung x der Umschalter sind die Ausgänge der beiden Zeichenfolgegeneratoren jeweils auf den Eingang eines Speichers und auf den Adreßeingang des jeweiligen anderen Speichers geschaltet. Die Schaltung ermöglicht dadurch den folgenden Vertauschungsvorgang. Ein von dem Zeichenfolgegenerator ZFG1, der eine Pseudozufallsfolge erzeuge, geliefertes Zeichen Za gelangt über den x-Kontakt des Umschalters u1 auf den Dateneingang des ersten Speichers RAM1 und auf den Adreßeingang des zweiten Speichers RAM2. Ein vom zweiten Zeichenfolgegenerator ZFG2 geliefertes Zeichen Zb gelangt entsprechend über den x-Kontakt des zweiten Umschalters u2 zum Adreßeingang des ersten Speichers RAM1 und zum Dateneingang des zweiten Speichers RAM2. Aus dem ersten Speicher RAM1 wird nun das unter der Adresse Zb stehende Zeichen Zzb ausgelesen und im Zwischenspeicher ZS1 abgelegt. Entsprechendes passiert im zweiten Speicher RAM2, wo das unter der Adresse Za stehende Zeichen Zsa ausgelesen und in dem entsprechenden Zwischenspeicher ZS2 abgelegt wird. Bei unveränderter Stellung der beiden steuerbaren Umschalter wird anschließend nach dem Auslesen im ersten Speicher RAM1 das Zeichen Za unter der Adresse Zb abgespeichert. Entsprechendes passiert im zweiten Speicher, wo unter der Adresse Za das Zeichen Zb abgespeichert wird.

Nunmehr werden die beiden steuerbaren Umschalter U1, U2 in Stellung y gebracht und das vorher aus dem ersten Speicher RAM1 ausgelesene und im zugeordneten Zwischenspeicher ZS1 abgelegte Zeichen Zzb wird nunmehr unter der Adresse des zuvor aus dem zweiten Speicher RAM2 ausgelesenen und im Zwischenspeicher ZS2 abgelegten Zeichens Zza im ersten Speicher RAM1 abgespeichert. Umgekehrt wird das im zweiten Zwischenspeicher ZS2 abgelegte Zeichen Zza unter der im ersten Zwischenspeicher enthaltenen Adresse Zzb im zweiten Speicher abgelegt. Damit ist ein Vertauschungsschritt beendet. Die beiden Schalter u1, u2 werden wieder in die Ausgangsstellung x gebracht, und ein nächster Vertauschungsschritt mit neuen Zeichenpaaren Za, Zb kann beginnen. Üblicherweise erfolgt die Zeichenumspeicherung bitweise parallel, die einfach gezeichneten Leitungen und Kontakte der Figur 1 (wie auch die der Figur 2) gelten dann stellvertretend für m Leitungen und Kontakte.

Es ist einleuchtend, daß die Zeichenanzahl der beiden Alphabete gleich sein muß. Der Zeichenvorrat selbst muß jedoch nicht identisch sein. Die von den Zeichenfolgegeneratoren gelieferten Zeichen Za bzw. Zb müssen Zeichen des entsprechenden Klar- bzw. Geheimalphabets sein, d. h. die Zeichenfolgegeneratoren dürfen jeweils nur solche Zeichen liefern, die in den ihnen zugeordneten Speichern abgelegten Alphabeten enthalten sind.

Die Figur 2 zeigt eine weitere Ausgestaltung der Erfindung mit einem Speicher RAM3, beispielsweise mit wahlfreiem Zugriff, dessen Ausgang auf den Eingang eines Zwischenspeichers ZS und dessen Eingang an den Ausgang des Zwischenspeichers geschaltet sind. Der Adreßeingang des Speichers RAM3 ist über einen steuerbaren Umschalter u in Stellung x an einen ersten Zeichenfolgegenerator ZFG1 und in der Stellung y an einen zweiten Zeichenfolgegenerator ZFG2 anschaltbar. Beide Generatoren liefern Folgen von Zeichen, unter denen im Speicher RAM3 Zeichen eines Alphabets abgespeichert sind. Der Zwischenspeicher ZS ist zweistufig, d. h. ein erstes vom RAM3 geliefertes Zeichen wird zunächst in der Stufe 1 abgelegt. Folgt ein weiteres Zeichen des Speichers RAM3, so wird das in der Zelle 1 abgelegte Zeichen in die Zelle 2 weitergeschoben. Der Zwischenspeicher ZS kann beispielsweise durch m zweistufige Schieberegister realisiert werden.

Die Funktion der Schaltung verläuft wie folgt. Ein vom ersten Zeichenfolgegenerator ZFG1 geliefertes Zeichen A gelangt über die Stellung x des Umschalters u auf den Adreßeingang des Speichers RAM3, aus dem das unter der Adresse A stehende Zeichen Za ausgelesen und in die erste Zelle 1 des Zwischenspeichers ZS abgespeichert wird. Anschließend wird der steuerbare Umschalter u auf die Stellung y umgeschaltet, wodurch ein vom zweiten Zeichenfolgegenerator ZFG2 geliefertes Zeichen B auf den Adreßeingang des Speichers RAM3 gelangen kann, aus dem das unter der Adresse B stehende Zeichen Zb ausgelesen und ebenfalls in die erste Zelle 1 des Zwischenspeichers ZS abgespeichert wird, nachdem zuvor der Inhalt der ersten Zelle in die zweite Zelle 2 geschoben worden ist. Dadurch steht das zuerst ausgelesene Zeichen Za wieder am Dateneingang des Speichers RAM3 an und kann unter der Adresse B dort abgespeichert werden. Es folgt nunmehr eine erneute Umschaltung auf die Stellung x des Umschalters u, wodurch die noch im ersten Zufallsfolgegenerator ZFG1 anstehende Adresse A wieder auf den Adreßeingang des Speichers RAM3 gelangen kann. Dadurch ist eine Einspeicherung des Zeichens Zb, das mittlerweile aus der ersten in die zweite Zelle des Zwischenspeichers geschoben worden ist und somit auch am Dateneingang des Speichers RAM3 ansteht, in denselben unter der Adresse A möglich, womit ein Tauschungsvorgang beendet ist.

In einer weiteren Ausgestaltung der Erfindung nach Figur 2 ist ein zweiter Speicher RAM4 mit wahlfreiem Zugriff vorgesehen, dessen Daten- und Adreßeingang mit dem Adreßeingang bzw. mit dem Dateneingang des ersten Speichers RAM3 verbunden ist (strichliert). Durch diese Anordnung werden Inhalt und Adresse des zweiten Speichers gegenüber Inhalt und Adresse des ersten Speichers vertauscht, wodurch im zweiten Speicher das inverse Alphabet entsteht. Diese Anordnung gestattet damit auch die Entschlüsselung von Texten.

## Ansprüche

1. Verfahren zur Verschlüsselung von Nachrichtenzeichen (Klartext), wobei diese durch Zeichen eines Geheimalphabets von der Länge des Klartextalphabets ersetzt werden, wobei das Geheimalphabet durch Vermischung von Zeichen aus einem Zeichenvorrat von n Zeichen mit n > 2 erzeugt wird und die einzelnen Zeichen des Geheimalphabets (Geheimmzeichen) mit Hilfe einer Zufalls- oder Pseudozufallsfolge (ZFG1) ausgewählt werden, dadurch gekennzeichnet, daß zusätzlich jeweils ein ausgewähltes Geheimzeichen, das einen ersten Speicherplatz aufweist, mit einem anderen mittels einer weiteren Folge (ZFG2) ausgewähltes Geheimzeichen, das einen zweiten Speicherplatz aufweist, getauscht wird.

2. Verfahren nach Anspruch 1, dadurch gekennzeichnet, daß die weitere Folge eine Zufalls- oder Pseudozufallsfolge (ZFG2) oder eine Folge ist, die alle Geheimzeichen erfaßt.

3. Verfahren nach einem der vorhergehenden Ansprüche, dadurch gekennzeichnet, daß die Auswahl des Geheimzeichens durch Auswahl seiner Speicherplatz-Adresse erfolgt.

4. Verfahren nach Anspruch 3, dadurch gekennzeichnet, daß zur Verschleierung eines Sprachsignals die Geheimzeichen den einzelnen Sprachsignalelementen gleichgesetzt werden.

5. Verfahren nach Anspruch 3 zur Verwendung bei der Frequenzzuweisung in nach dem Frequenzsprungverfahren arbeitenden Funknetzen, dadurch gekennzeichnet, daß den momentanen Funkfrequenzen der einzelnen Stationen des Netzes jeweils ein Geheimzeichen zugeordnet wird.

6. Schaltungsanordnung zur Durchführung des Verfahrens nach einem der vorhergehenden Ansprüche, gekennzeichnet durch Mittel vorhanden sind um jeweils ein ausgewähltes Geheimzeichen, das einen ersten Speicherplatz aufweist, mit einem anderen mittels einer weiteren Folge (ZFG2) ausgewählten Geheimzeichen, das einen zweiten Speicherplatz aufweist zu tauschen und durch zwei Speicher (RAM1, RAM2), denen jeweils ein Zwischenspeicher (ZS1, ZS2), ein Zeichenfolgegenerator (ZFG1, ZFG2) und ein steuerbarer Umschalter (u1, u2) zugeordnet sind, wobei durch die steuerbaren Umschalter auf die Eingänge bzw. Adress-Eingänge der Speicher, deren Ausgänge jeweils mit dem Eingang des zugeordneten Zwischenspeichers verbunden sind, jeweils in der einen Stellung (x) der steuerbaren Umschalter der Ausgang des zugeordneten bzw. des anderen Zeichenfolgegenerators und in der anderen Stellung (y) der Ausgang des zugeordneten bzw. des anderen Zwischenspeichers angeschaltet sind (Figur 1).

7. Schaltungsanordnung nach Anspruch 6, dadurch gekennzeichnet, daß die beiden Speicher (RAM1, RAM2) jeweils ein Alphabet enthalten, dessen Zeichen durch die Zeichen des anderen Alphabets adressierbar sind (Figur 1).

8. Schaltungsanordnung zur Durchführung des Verfahrens nach einem der Ansprüche 1 bis 5, gekennzeichnet durch einen Speicher (RAM3) und einen Zwischenspeicher (ZS), deren Eingänge jeweils mit dem Ausgang des anderen verbunden sind, sowie durch zwei Zeichenfolgegeneratoren (ZFG1, ZFG2), deren Ausgänge jeweils auf den Adresseingang des Speichers (RAM3) anschaltbar sind (Figur 2).

9. Schaltungsanordnung nach Anspruch 8, gekennzeichnet durch einen weiteren Speicher (RAM4), dessen Adresseingang mit dem Ausgang des Zwischenspeichers (ZS) verbunden ist und auf dessen Eingang die Ausgänge der Zeichenfolgegeneratoren (ZFG1, ZFG2) anschaltbar sind (Figur 2).

10. Schaltungsanordnung nach einem der Ansprüche 6 bis 9, dadurch gekennzeichnet, daß der eine Zeichenfolgegenerator ein periodischer Zähler ist.

## Claims

1. Method for the enciphering of communications characters (text in clear), wherein these are replaced by characters of a secret alphabet of the length of the clear text alphabet, wherein the secret alphabet is generated through intermixing of characters from a character stock of n characters, n is greater than 2 and the individual characters of the secret alphabet (secret characters) are selected with the aid of a random or pseudo-random sequence (ZFG1), characterised thereby, that additionally a selected secret character, which displays a first storage place, is exchanged each time against another secret character, which displays a second storage place and has been selected by means of a further sequence (ZFG2).

2. Method according to claim 1, characterised thereby, that the further sequence is a random or pseudo-random sequence (ZFG2) or a sequence which comprehends all secret characters.

3. Method according to one of the preceding claims, characterised thereby, that the selection of the secret character takes place through selection of its storage place address.

4. Method according to claim 3, characterised thereby, that for the scrambling of a speed signal, the secret characters are equated with the individual speed signal elements.

5. Method according to claim 3 for use in the frequency allocation in radio networks operating by the frequency step method, characterised thereby, that a respective secret character is associated with each of the instantaneous frequencies of the individual stations of the network.

6. Circuit arrangement for the performance of the method according to one of the preceding claims, characterised by means to exchange a selected secret character, which displays a first storage place, each time against another secret character, which displays a second storage place and has been selected by means of a further sequence (ZFG2) and by two stores (RAM1, RAM2), which are each associated respectively with an intermediate store (ZS1, ZS2), a character sequence generator (ZFG1, ZFG2) and a controllable changeover switch (u1, u2), wherein the output of the associated or the other character sequence generator is switched in the one setting (x) of the controllable change-over switches and the output of the associated or the other intermediate store is switched in the other setting (y) of the controllable change-over switches each time through the controllable change-over switches onto the inputs or address inputs of the stores, the outputs of which are each connected with the input of the respectively associated intermediate store.

7. Circuit arrangement according to claim 6, characterised thereby, that both the stores (RAM1, RAM2) each contain a respective alphabet, the characters of which are addressable through the characters of the other alphabet (Figure 1).

8. Circuit arrangement for the performance of the method according to one of the claims 1 to 5, characterised by a store (RAM3) and an intermediate store (ZS), the inputs of which are each connected with the output of the respective other, as well as by two character sequence generators (ZFG1, ZFG2), the outputs of which are each time connectible to the address input of the store (RAM3) (Figure 2).

9. Circuit arrangement according to claim 8, characterised by a further store (RAM4), the address input of which is connected with the output of the intermediate store (ZS) and to the input of which are connectible the outputs of the character sequence generators (ZFG1, ZFG2) (Figure 2).

10. Circuit arrangement according to one of the claims 6 to 9, characterised thereby, that the one character sequence generator is a periodic counter.

## Revendications

1. Procédé pour coder des caractères d'information (langage clair), selon lequel ces caractères sont remplacés par des caractères d'un alphabet secret ayant la longueur de l'alphabet du langage clair, et selon lequel l'alphabet secret est produit par mélange de caractères d'une réserve de caractères contenant n caractères, où $n > 2$, et les différents caractères de l'alphabet secret (caractères secrets) sont sélectionnés à l'aide d'une succession aléatoire ou pseudo-aléatoire (ZFG1), caractérisé en ce que, en plus, un caractère secret sélectionné, occupant un premier emplacement de mémoire, est interverti chaque fois avec un autre caractère secret, sélectionné au moyen d'une succession supplémentaire (ZFG2), qui occupe un second emplacement de mémoire.

2. Procédé selon la revendication 1, caractérisé en ce que la succession supplémentaire est une succession aléatoire ou pseudo-aléatoire (ZFG2) ou une succession qui contient tous les caractères secrets.

3. Procédé selon une des revendications précédentes, caractérisé en ce que la sélection du caractère secret s'effectue par sélection de son adresse (d'emplacement) de mémoire.

4. Procédé selon la revendication 3, caractérisé en ce que, pour masquer un signal vocal, les caractères secrets sont assimilés aux différents éléments du signal vocal.

5. Procédé selon la revendication 3, destiné a être utilisé pour l'attribution de fréquences dans des réseaux de radiocommunication travaillant selon le procédé de saut de fréquence, caractérisé en ce qu'un caractère secret est conjugué chaque fois aux radiofréquences instantanées des différentes stations du réseau.

6. Montage pour la mise en œuvre du procédé selon une des revendications précédentes, caractérisé par des moyens pour intervertir chaque fois un caractère secret sélectionné, occupant un premier emplacement de mémoire, avec un autre caractère secret, sélectionné au moyen d'une succession supplémentaire (ZFG2), qui occupe un second emplacement de mémoire, et par deux mémoires (RAM1, RAM2), à chacune desquelles sont associés un générateur de succession de caractères (ZFG1, ZFG2) et un commutateur commandé (u1, u2), les commutateurs commandés branchant sur les entrées respectivement les entrées d'adresses des mémoires, dont les sorties sont connectées chaque fois à l'entrée de la mémoire intermédiaire associée, à une position (x) des commutateurs commandés, la sortie du générateur de succession de caractères respectivement la sortie de l'autre générateur de succession de caractères et, à l'autre position (y), la sortie de la mémoire intermédiaire associée respectivement la sortie de l'autre mémoire intermédiaire (figure 1).

7. Montage selon la revendication 6, caractérisé en ce que les deux mémoires (RAM1, RAM2) contiennent chacune un alphabet dont les caractères sont adressables par les caractères de l'autre alphabet (figure 1).

8. Montage pour la mise en œuvre du procédé selon une des revendications 1 à 5, caractérisé par une mémoire (RAM3) et une mémoire intermédiaire (ZS), dont les entrées sont connectées chaque fois à la sortie de l'autre, ainsi que par deux générateurs de succession de caractères (ZFG1, ZFG2), dont les sorties peuvent être branchées chaque fois sur l'entrée d'adresses de la mémoire (RAM3) (figure 2).

9. Montage selon la revendication 8, caractérisé par une mémoire supplémentaire (RAM4), dont l'entrée d'adresses est reliée à la sortie de la mémoire intermédiaire (ZS) et sur l'entrée de laquelle peuvent être branchées les sorties des générateurs de succession de caractères (ZFG1, ZFG2) (figure 2).

10. Montage selon une des revendications 6 à 9, caractérisé en ce que le générateur de succession de caractères est un compteur périodique.

Fig.1

Fig. 2